# DEMANDE DE BREVET EUROPEEN

(11) **EP 4 437 828 A1**
(43) Date de publication de la demande: **02.10.2024**
(21) Numéro de dépôt: 24167117.1
(22) Date de dépôt: 28.03.2024
(51) Int. Cl.: A01D 34/86, A01G 23/091

(54) **MACHINE POUR L'ENTRETIEN DU PAYSAGE ET VÉHICULE ÉQUIPÉ D'UNE TELLE MACHINE**

(30) Priorité: 31.03.2023 FR 2303153
(71) Demandeur: Kuhn-Audureau SAS, 85260 La Copechagnière (FR)
(72) Inventeur: LE GUYADER, Dimitri, 44200 NANTES (FR)
(74) Mandataire: Hager, Esther Evelyne

(57) **Abrégé**

L'invention concerne une machine pour l'entretien du paysage, plus particulièrement du type épareuse ou faucheuse-débroussailleuse, apte et destinée à équiper un véhicule motorisé, la machine comprenant :
- un bras (1) articulé sur un bâti (8) apte à être monté sur le véhicule motorisé,
- un outil (2) relié de manière articulée à l'une des extrémités du bras (1),
- un dispositif de liaison (3) assurant la liaison mécanique entre l'outil (2) et le bras (1) et comprenant une première partie solidaire du bras (1) et une deuxième partie solidaire de l'outil (2), un axe de rotation entre la première partie et la deuxième partie et un mécanisme d'entraînement du mouvement de rotation,
- au moins un élément d'alimentation (4) allongé, souple ou flexible
caractérisée en ce que l'élément ou au moins l'un des élément(s) d'alimentation (4) traverse le dispositif de liaison (3) en étant guidé dans une ouverture pratiquée à travers le dispositif de liaison (3) et que la machine comprend une interface (5 ; 5') de raccordement et un support (51 ; 51'). Elle a également pour objet un véhicule roulant motorisé équipé d'une telle machine

## Description

La présente invention concerne le domaine des machines utilisées dans le cadre des travaux d'entretien des routes et du paysage, en particulier pour l'entretien des bordures de routes et le traitement de la végétation et/ou du sol et a pour objet une machine pour l'entretien du paysage, plus particulièrement du type épareuse ou faucheuse-débroussailleuse et un véhicule roulant motorisé équipé d'une telle machine.

On connait déjà des machines pour l'entretien du paysage, connues sous le nom de faucheuses-débroussailleuses (ou épareuses), pour entretenir des zones de travail formées par les dépendances routières telles que les bordures, haies, talus et fossés. Elles permettent plus particulièrement de couper ou faucher l'herbe, les buissons et les arbustes au bord des routes et des champs agricoles.

De telles faucheuses-débroussailleuses comprennent généralement un bras articulé, un outil et un bâti support. Le bras comprend deux extrémités opposées entre lesquelles s'étend le bras, à savoir une première extrémité reliée de manière articulée au bâti et une deuxième extrémité reliée de manière articulée à l'outil. Le bâti est monté sur un véhicule roulant motorisé.

Le bras articulé est généralement constitué d'au moins deux parties articulées entre elles. L'une des parties du bras comprenant la première extrémité est appelée flèche et l'autre comprenant la deuxième extrémité est appelée balancier. Une liaison articulée (à un ou plusieurs degrés de liberté) assure la liaison entre le bras et l'outil.

L'outil comprend généralement un rotor muni d'au moins un organe de travail tels que des fléaux ou des marteaux. L'outil peut être, par exemple, un lamier, un sécateur et/ou un broyeur, une cureuse.

Cependant, plusieurs problèmes peuvent se poser lors de l'utilisation de ces faucheuses-débroussailleuses.

Tout d'abord, les zones de travail sont souvent difficiles d'accès et la présence d'obstacles (panneaux, poteaux, branches, arbres...) rend difficile ou peu aisé le travail de l'outil.

Pour remédier à cet inconvénient, des faucheuses-débroussailleuses ou machines analogues comprennent un outil qui peut être orienté et positionné spatialement dans une ou plusieurs directions grâce à une liaison comprenant un ou plusieurs degrés de liberté entre le bras et l'outil.

Une telle faucheuse-débroussailleuse est, par exemple, divulguée dans le document FR3091462A1. Elle comprend une liaison triplement articulée permettant à l'outil de coupe de travailler dans les zones où un outil de coupe classique avec une liaison simplement ou doublement articulée n'est pas capable d'accéder.

Un autre problème, notamment avec une liaison articulée, concerne les flexibles/câbles d'alimentation reliant le moteur d'entraînement hydraulique ou électrique de l'outil à la source d'alimentation en énergie hydraulique ou électrique du véhicule motorisé. Le flexible ou le câble doit disposer d'une certaine longueur pour pouvoir s'étendre du véhicule jusqu'au moteur en passant par le bras articulé. La longueur du flexible ou du câble doit être adaptée à la cinématique de la machine, notamment à son bras articulé et, dans le cas où la machine comprend une liaison articulée, au bras articulé ainsi qu'à la liaison articulée entre le bras et l'outil. Le flexible ne doit donc être ni trop long ni trop court mais de longueur appropriée pour autoriser les différents mouvements sans risque de détérioration. Pour ne pas créer de contrainte mécanique dans le flexible ou le câble d'alimentation, on prévoit généralement une petite sur-longueur surtout au niveau des articulations. Le flexible doit être suffisamment long pour autoriser tous les mouvements de la liaison articulée sans risquer de détériorer le flexible ou le câble ou d'empêcher une circulation normale du fluide dans le flexible. De cette manière, le flexible ou le câble forme une boucle autour de l'articulation afin d'éviter qu'il entre en contact avec la liaison articulée. Cette sur-longueur de flexible ou de câble permet d'éviter que les flexibles ou les câbles soient étirés, torsadés ou entortillés autour de leur axe dans les conditions limites.

De plus, notamment dans le cas de flexibles hydrauliques, pour ne pas générer des conditions de fonctionnement anormales (impact sur le débit de fluide hydraulique, perte de charge, frottement, usure), il convient généralement de veiller à ce que la position et la fixation du flexible permettent de toujours maintenir un rayon de courbure minimum de la boucle.

Ainsi, plus particulièrement dans le cas de l'utilisation d'une liaison comportant au moins deux articulations, notamment une liaison triplement articulée, entre le bras articulé et l'outil, les flexibles, câbles ou autres éléments d'alimentation sont plus longs pour pouvoir être compatibles avec la plage étendue de mouvement de l'outil.

Toutefois, il arrive fréquemment que les flexibles ou les câbles, du fait de leur longueur importante, viennent s'accrocher à ou interférer avec la végétation et autres obstacles et/ou soient arrachés, malgré la formation des boucles. D'autres éléments d'alimentation que les flexibles ou câbles fournissant de l'énergie hydraulique ou électrique au moteur de l'outil peuvent être concernés tels que des câbles électriques transportant de l'information ou des flexibles hydrauliques transportant un fluide de refroidissement.

La présente invention a pour but de pallier au moins l'un de ces inconvénients.

La machine pour l'entretien du paysage, selon la présente invention, plus particulièrement du type épareuse ou faucheuse-débroussailleuse, apte et destinée à équiper un véhicule motorisé, la machine comprenant :
- un bras articulé sur un bâti apte à être monté sur le véhicule motorisé,
- un outil relié de manière articulée à l'une des extrémités du bras et comprenant des organes de travail, plus particulièrement de coupe et/ou de broyage, entrainés par un moteur supporté par l'outil,
- un dispositif de liaison assurant la liaison mécanique entre l'outil et le bras et comprenant une première partie solidaire du bras et une deuxième partie solidaire de l'outil, un axe de rotation entre la première partie et la deuxième partie et un mécanisme d'entraînement du mouvement de rotation des première et deuxième parties l'une par rapport à l'autre autour de l'axe de rotation,
- au moins un élément d'alimentation allongé, souple ou flexible s'étendant au moins entre le bras et l'outil,
se caractérise en ce que l'élément ou chaque élément d'alimentation traverse le dispositif de liaison en étant guidé dans une ouverture pratiquée à travers le dispositif de liaison et que la machine comprend une interface de raccordement et un support.

La présente invention a également pour objet un véhicule roulant motorisé équipé d'une machine pour l'entretien du paysage, plus particulièrement du type épareuse ou faucheuse-débroussailleuse, la machine comportant un bâti monté sur le véhicule roulant motorisé, se caractérisant en ce que la machine pour l'entretien du paysage consiste en une machine selon la présente invention. Cette machine pour l'entretien du paysage peut faire partie de la catégorie des machines agricoles ou de la catégorie des machines de travaux routiers.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
[Fig. 1] est une vue en perspective d'une machine pour l'entretien du paysage du type faucheuse-débroussailleuse, selon la présente invention, dont l'outil, du type lamier, est entrainé par un moteur hydraulique, avec le dispositif de liaison comprenant une interface de raccordement hydraulique,
[Fig. 2] est une vue de détail en perspective de la partie de la machine située au niveau de l'extrémité du bras articulé comprenant le dispositif de liaison et l'outil, avec un outil différent du type tête de coupe avec rotor pour couper et broyer les végétaux,
[Fig. 3] est une vue en perspective du dispositif de liaison représenté sur la figure 1 ou 2,
[Fig. 4] est une vue en coupe du dispositif de liaison représenté sur la figure 3,
[Fig. 5] est une vue en perspective et éclatée du dispositif de liaison représenté sur la figure 3 ou 4,
[Fig. 6] est une vue en perspective de l'interface de raccordement hydraulique représentée sur la figure 5, avec l'un des éléments de raccordement de l'interface comportant un raccord tournant à l'une de ses extrémités située du côté de l'outil,
[Fig. 7] est une vue en perspective de l'interface de raccordement représentée sur la figure 6 selon une autre orientation,
[Fig. 8] est une vue en perspective d'un dispositif de liaison dans un autre mode de réalisation, notamment de son mécanisme d'entraînement et logeant une interface de raccordement électrique comportant un seul élément de raccordement raccordée à une pluralité d'éléments d'alimentation électrique,
[Fig. 9] montre le dispositif de liaison représenté sur la figure 8 selon une autre orientation, montrant un connecteur adapté pour la connexion des deuxièmes portions d'élément d'alimentation électrique situées du côté de l'outil.

Les figures montrent une machine pour l'entretien du paysage, plus particulièrement du type épareuse ou faucheuse-débroussailleuse, apte et destinée à équiper un véhicule motorisé, la machine comprenant :
- un bras 1 articulé sur un bâti 8 apte à être monté sur le véhicule motorisé,
- un outil 2 relié de manière articulée à l'une des extrémités 1c du bras 1 et comprenant des organes 20 de travail, plus particulièrement de coupe et/ou de broyage, entrainés par un moteur 21 supporté par l'outil 2,
- un dispositif de liaison 3 ; 3' assurant la liaison mécanique entre l'outil 2 et le bras 1 et comprenant une première partie 30 ; 30' solidaire du bras 1 et une deuxième partie 31 ; 31' solidaire de l'outil 2 un axe de rotation X2 entre la première partie 30 ; 30' et la deuxième partie 31 ; 31' et un mécanisme d'entraînement 32 ; 32' du mouvement de rotation des première et deuxième parties 30, 31 ; 30', 31' l'une par rapport à l'autre autour de l'axe de rotation X2,
- au moins un élément d'alimentation 4 ; 4' allongé, souple ou flexible, s'étendant au moins entre le bras 1 et l'outil 2. L'élément ou au moins l'un des éléments d'alimentation 4 ; 4' peut être un élément d'alimentation hydraulique ou électrique comme on le verra plus loin.

Le véhicule motorisé peut être un tracteur, lequel tracteur pouvant être équipé d'un attelage trois points destiné à recevoir le bâti 8 de la faucheuse-débroussailleuse. La machine pour l'entretien du paysage peut être montée à l'avant ou à l'arrière du véhicule motorisé. Le véhicule motorisé peut être un véhicule automoteur. Une telle machine pour l'entretien du paysage peut être utilisée dans le cadre agricole pour l'entretien des abords de champs et chemins et/ou dans le cadre des travaux routiers pour le nettoyage des bordures de routes.

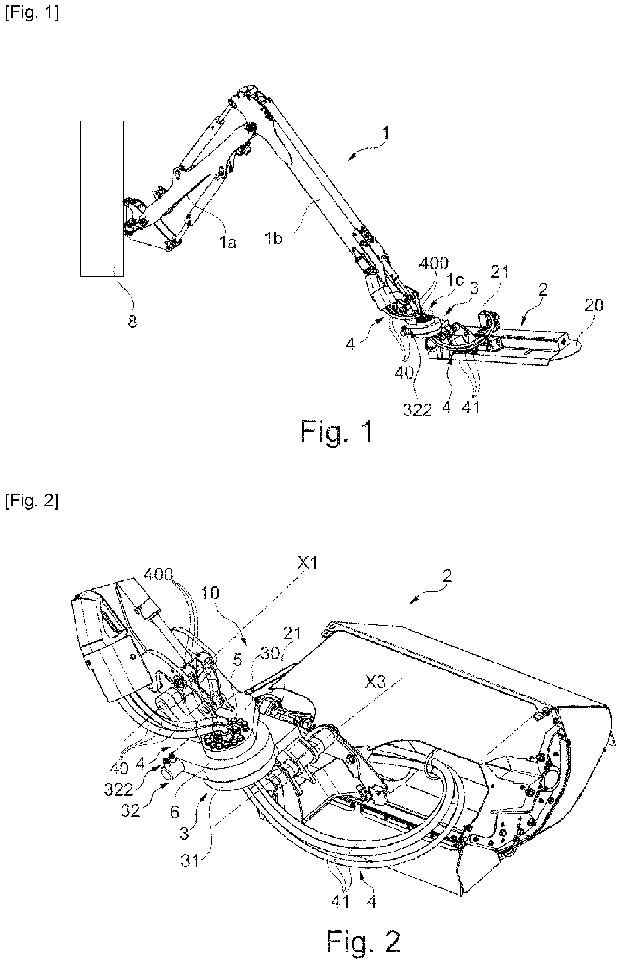

Si on se réfère à la figure 1, on peut voir que l'outil 2 peut être un lamier de coupe et peut comporter des organes 20 de travail du type scie. Un tel lamier peut être équipé d'au moins une scie. Ce type d'outil est spécialement adapté à l'ébranchage d'arbres, pour la taille des haies et buissons ou pour l'élagage de la végétation sur les talus et les bords de routes. Sur la figure 2, on peut voir que, dans une autre forme, l'outil 2 peut comporter une tête de coupe équipée d'organes de fauchage, de débroussaillage ou de broyage. Ainsi, l'outil 2 peut faucher, débroussailler ou broyer des végétaux pour l'entretien des abords de champs ou de routes. Les organes de travail sont cachés par le capot de l'outil 2. L'outil 2 peut comporter une combinaison d'organes 20 de travail assurant des fonctions différentes. La machine pour l'entretien du paysage est aussi destinée à être utilisée sur des terrains en pente, par exemple des talus ou dans des fossés. Tel que représenté sur la figure 1, le bras articulé est constitué d'au moins deux parties 1a, 1b (flèche 1a, balancier 1b) articulées entre elles. Dans une alternative non représentée, le bras articulé peut être constitué de trois parties, ou même de plus de trois parties, articulées entre elles.

Le dispositif de liaison 3 est préférentiellement adapté pour permettre une rotation comprise entre 0° et 360° entre les première et deuxième parties 30, 31 l'une par rapport à l'autre autour de l'axe de rotation X2. Une rotation de cette amplitude est réalisable grâce au mécanisme d'entraînement 32 qui sera décrit plus en détail par la suite.

On entend par élément d'alimentation 4 ; 4' un élément de liaison permettant le transport d'une énergie ou d'une information vers ou depuis l'outil 2, par exemple vers et depuis le moteur 21 de l'outil 2. L'énergie peut être une énergie électrique, lumineuse ou hydraulique. L'énergie électrique ou hydraulique transportée par un tel élément d'alimentation peut servir à l'alimentation électrique ou hydraulique du moteur 21 de l'outil 2 lorsque celui-ci est un moteur électrique ou hydraulique. L'énergie transportée peut également servir au refroidissement du moteur 21. Une information peut être transportée, sous la forme d'un signal électrique ou lumineux, dans un élément d'alimentation électrique (câble ou fil électrique) ou un élément d'alimentation permettant le transport de la lumière (fibre optique par exemple). De tels éléments d'alimentation électrique ou optique permettant le transport d'une information ne sont pas illustrés. L'élément ou au moins l'un des éléments d'alimentation 4 ; 4' peut être un élément d'alimentation hydraulique ou électrique et le moteur 21 peut être respectivement un moteur hydraulique ou électrique.

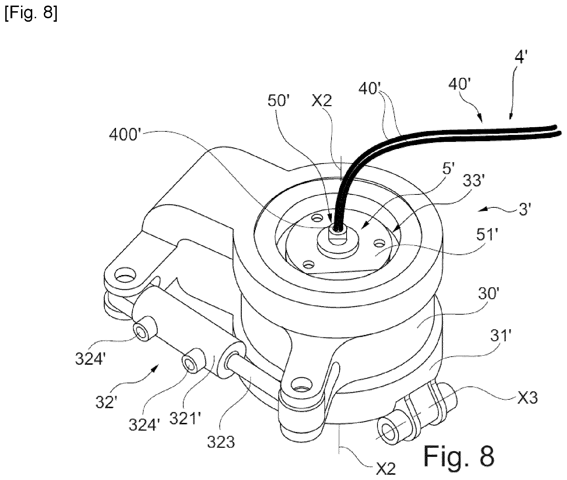

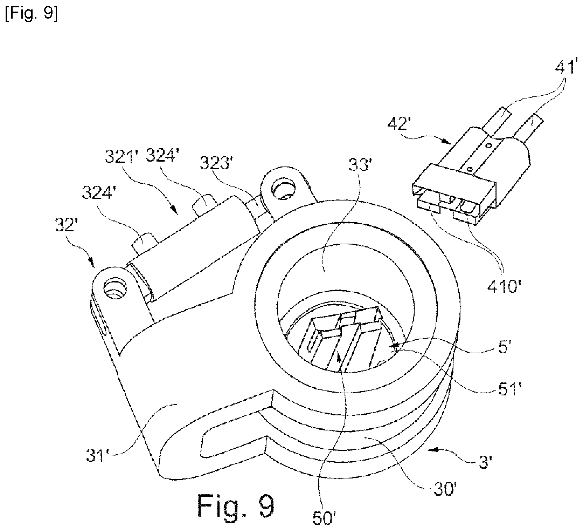

Les figures 1 à 7 montrent des éléments d'alimentation 4 hydraulique (visible au moins partiellement) reliés par l'une de leurs extrémités au moteur 21 hydraulique de l'outil 2 de la machine pour l'entretien du paysage. Le moteur 21 hydraulique est partiellement caché par le capot sur la figure 2. L'autre extrémité des éléments d'alimentation 4 est connectée à une source d'alimentation en fluide hydraulique (non illustrée). Le véhicule motorisé dispose d'ordinaire d'un système hydraulique avec différents distributeurs hydrauliques, lesquels peuvent être utilisés pour diriger l'huile vers l'outil 2 par l'intermédiaire des éléments d'alimentation 4. La source d'énergie hydraulique peut être le réservoir du véhicule motorisé par exemple. Les figures 8 et 9 montrent, partiellement, des éléments d'alimentation 4' électrique aptes à être reliés par l'une de leurs extrémités à un moteur électrique (non représenté) de l'outil d'une machine pour l'entretien du paysage selon la présente invention. L'autre extrémité des éléments d'alimentation 4' électrique est apte à être connectée à une source d'alimentation en énergie électrique. La source d'énergie électrique peut être une source d'énergie autonome telle qu'une génératrice de courant par exemple.

De tels éléments d'alimentation 4 ; 4' disposent donc d'une certaine longueur. Pour les préserver, il est courant de les fixer i au moins sur le bras 1 de la machine pour l'entretien du paysage, par exemple au moyen de colliers de fixation. La source d'alimentation peut être montée sur le véhicule motorisé (non illustré) ou sur la machine pour l'entretien du paysage.

Dans le cas d'une machine pour l'entretien du paysage dont l'outil 2 est commandé par un moteur 21 hydraulique (cas des figures 1 à 7), ce cas étant appelé par la suite mode hydraulique, ce sont des éléments d'alimentation 4 hydrauliques qui relient le moteur 21 à la source d'énergie hydraulique. Un tel élément d'alimentation 4 hydraulique est connu sous le nom de flexible hydraulique. Le flexible hydraulique permet le passage dans un sens donné d'un fluide hydraulique, par exemple une huile hydraulique, notamment un fluide hydraulique haute pression. Dans le cas d'une machine pour l'entretien du paysage équipée d'un moteur électrique, appelé par la suite mode électrique, ce sont un ou des élément(s) d'alimentation électrique figures 8 et 9), connu(s) généralement sous le nom de câble ou fil électrique, qui permettent le passage du courant électrique selon une polarité donnée, positive ou négative par exemple. Cet autre mode de réalisation électrique sera décrit plus en détail plus loin dans la description.

Ainsi, dans le mode hydraulique, la machine pour l'entretien du paysage peut comprendre au moins deux éléments d'alimentation 4 hydraulique pour l'alimentation en haute pression du moteur 21. Un élément d'alimentation permet la circulation du fluide haute pression vers le moteur 21 hydraulique et l'autre le retour du fluide haute pression depuis le moteur 21 vers la source d'énergie hydraulique. Comme on peut le voir notamment sur les figures 1 à 5, un troisième élément d'alimentation 4 hydraulique (visible au moins partiellement), connu sous le nom de drain, peut être prévu pour les fuites internes au moteur 21 hydraulique et/ou l'évacuation de l'huile chaude dans le circuit fermé.

Conformément à la présente invention, dans une telle machine, le ou chaque élément d'alimentation 4 ; 4' traverse le dispositif de liaison 3 ; 3' en étant guidé dans une ouverture 33 ; 33' pratiquée à travers le dispositif de liaison 3 ; 3'. L'ouverture 33 ; 33' permet avantageusement de guider l'élément d'alimentation ou au moins l'un des éléments d'alimentation 4, 4'. En passant au travers de l'ouverture 33 ; 33' du dispositif de liaison 3, la longueur de l'élément d'alimentation 4 ; 4' ou de chaque élément d'alimentation 4 ; 4' peut être réduite puisque le chemin est plus direct entre la connexion à l'un(e) des distributeurs/sources d'alimentation en énergie du véhicule motorisé et le moteur 21 hydraulique qui actionne les organes de travail 20.

De préférence l'ouverture 33 ; 33' est une ouverture interne, de préférence une ouverture de section circulaire ou globalement circulaire.

De préférence, comme c'est le cas par exemple dans le mode hydraulique illustré par les figures 1 à 7 et dans le mode électrique illustré par les figures 8 et 9, l'ouverture 33 ; 33' est pratiquée à travers le dispositif de liaison 3 ; 3' de sorte que le ou chaque élément d'alimentation 4 ; 4' traverse le dispositif de liaison 3 ; 3' essentiellement au niveau de l'axe de rotation X2. On entend par « au niveau » : à proximité, à hauteur, le long de l'axe. De préférence, on peut voir également que l'ouverture 33 ; 33' est pratiquée à travers le dispositif de liaison 3 ; 3' en s'étendant parallèlement à l'axe de rotation X2, de préférence en étant centrée sur l'axe de rotation X2. Ces caractéristiques permettent de limiter les mouvements du ou des élément(s) d'alimentation 4 ; 4', ce qui évite leur usure prématurée. Elles permettent également un gain de poids par une réduction de la longueur totale de chacun de ces éléments d'alimentation 4 ; 4' (par rapport aux éléments d'alimentation 4 ; 4' passant à côté et à l'extérieur du dispositif de liaison dans les machines actuelles) du fait d'un trajet plus directe à travers le dispositif de liaison 3 ; 3'. En passant au travers de l'ouverture 33, 33' du dispositif de liaison 3, 3' un passage plus soigné et plus esthétique des éléments d'alimentation 4, 4' est réalisable. Grâce à l'ouverture 33, 33' la sur-longueur formant la boucle de l'élément d'alimentation 4, 4' autour de l'articulation peut être supprimée. Les éléments d'alimentation 4, 4' sont de ce fait aussi mieux protégés du risque de chute de branches. Les éléments d'alimentation 4, 4' qui passent dans le dispositif de liaison 3, 3' sont moins sujets à rester accrocher dans les branches ou les broussailles du fait d'un encombrement moindre.

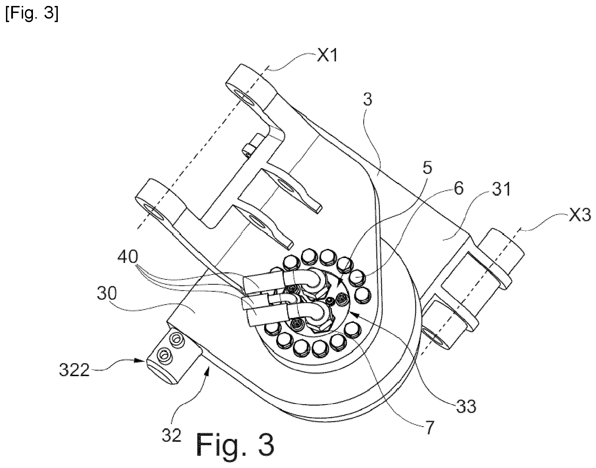

Les figures 3, 4 et 5 illustrent plus particulièrement, dans le mode hydraulique, l'ouverture 33 pratiquée à travers le dispositif de liaison 3 pour le passage des trois éléments d'alimentation 4 chacun en forme de flexible, essentiellement au niveau de l'axe de rotation X2. Dans cette réalisation, un premier flexible 4 permet d'amener le fluide hydraulique vers le moteur 21. Un deuxième flexible 4 permet l'évacuation dans le moteur 21 du fluide hydraulique. Ces deux flexibles 4 disposent d'un diamètre et d'une longueur identique. Un troisième flexible 4 fait office de drain et dispose d'un diamètre plus petit. On peut voir également que l'ouverture 33 est pratiquée dans le dispositif de liaison 3 en s'étendant parallèlement à l'axe de rotation X2 et que l'ouverture 33 est centrée sur l'axe de rotation X2.

Dans un mode de réalisation préférentiel, comme on peut le voir notamment sur les figures 2 à 9, la machine comprend en outre une interface 5 ; 5' de raccordement. L'interface 5 ; 5' est logée dans le dispositif de liaison 3 ; 3', avantageusement dans l'ouverture 33 du dispositif de liaison 3 ; 3'. La position de l'interface 5 ; 5' de raccordement est fixe dans le dispositif de liaison 3 ; 3. L'interface 5 ; 5' peut comprendre au moins un élément de raccordement 50 ; 50' et un support 51. L'élément de raccordement 50 ; 50' permet de relier la première portion 40 de l'élément d'alimentation 4 à la deuxième portion 41 de cet élément d'alimentation. Le support 51 fait, quant à lui, office de support pour recevoir et porter au moins un élément de raccordement 50 ; 50'. Grâce au support 51, un arrangement particulier du ou des éléments de raccordement 50 ; 50', respectivement des éléments d'alimentation 4 ; 4', par exemple par rapport à l'axe de rotation X2 est respecté. En outre, le ou au moins l'un des élément(s) d'alimentation 4 ; 4' peut être divisé en deux portions 40, 41 ; 40', 41' raccordées fonctionnellement entre elles au moyen de l'interface 5 ; 5', à savoir, d'une part, une première portion 40 ; 40' munie d'un embout 400 ; 400' raccordé à l'interface 5 ; 5' et, d'autre part, une deuxième portion 41 ; 41' munie d'un embout 410 ; 410' raccordé à l'interface 5 ; 5' de sorte à être fonctionnellement raccordé à l'embout 400 ; 400' de la première portion 40 ; 40' (de l'élément d'alimentation 4 ; 4' correspondant). La division de l'élément d'alimentation 4 ; 4' en deux portions facilite le remplacement de l'une des portions en cas de détérioration. Cela facilite également le montage et/ou démontage des éléments d'alimentation 4 ; 4' lors du remplacement de l'outil 2. Dans le mode hydraulique, l'embout 400, 410 est préférentiellement serti sur la portion 40, 41 concernée de l'élément d'alimentation 4 correspondant. Cet embout 400, 410 peut est associé à un écrou 9 permettant la fixation de l'embout 400, 410 par vissage sur l'interface 5. L'interface 5 ; 5' est configurée pour permettre le raccordement fonctionnel, c'est-à-dire par exemple électrique ou hydraulique, entre l'embout 400 ; 400' de la première portion 40 ; 40' du ou de chaque élément d'alimentation 4 ; 4' et l'embout 410 ; 41 0' de la deuxième portion 41 ; 41' du même élément d'alimentation 4 ; 4'.

Dans une forme de réalisation préférentielle, tel que visible sur les figures 2 à 5, au moins l'un des embouts 400 peut être coudé ou muni d'un coude, de préférence en angle droit ou obtus. Au moins l'un des embouts peut être droit. De manière alternative, l'embout 400 est muni d'un coude rapporté. Selon une autre alternative, la première portion 40 ou la deuxième portion 41 peut être munie d'un embout 400 droit (0°) qui est associé à un raccord coudé d'un angle 45° ou 90°. Selon la solution illustrée aux figures 2 à 5, l'embout 400 de la première portion 40 peut être coudé à angle droit et l'embout 410 de la deuxième portion 41 peut être coudé à angle obtus. L'avantage d'un embout coudé est de pouvoir respecter le rayon de courbure minimum ou nécessaire pour un flexible hydraulique. Un autre avantage d'utiliser un embout coudé est d'améliorer le guidage des éléments d'alimentation 4, notamment pour guider la première portion 40 et la deuxième portion 41. Cette forme de réalisation coudée convient plus particulièrement au mode hydraulique.

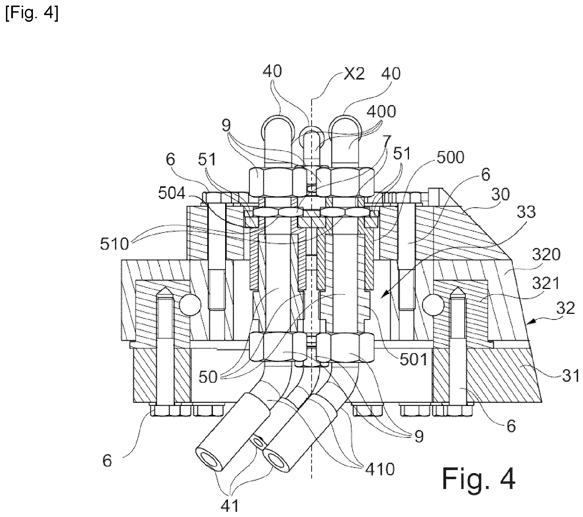

De préférence, comme on peut le voir notamment sur les figures 4 à 7, au moins l'un des embouts 410 est raccordé à l'interface 5 par l'intermédiaire d'un raccord tournant de sorte à pouvoir tourner librement autour de son axe de raccordement. Un tel raccord tournant est plus particulièrement intégré ou monté dans l'interface 5, c'est-à-dire que l'interface 5 comprend de préférence un tel raccord tournant, mais la présente invention peut prévoir (cette forme n'est pas illustrée) que le raccord tournant soit intégré ou monté dans l'embout 410. Cette caractéristique du raccord tournant sera décrite plus en détail par la suite dans la forme de réalisation illustrée où le raccord tournant fait partie intégrante de l'interface de raccordement 5.

Dans une forme de réalisation préférentielle de l'interface 5, comme on peut le voir plus particulièrement sur les figures 4 à 7, 9, l'interface 5 ; 5' peut comprendre un ou plusieurs élément(s) de raccordement 50 ; 50', de préférence rigide, dédié(s) chacun à l'élément d'alimentation ou à au moins l'un des élément(s) d'alimentation 4 ; 4'. Chaque élément de raccordement peut comporter deux extrémités de raccordement, de préférence axialement opposées, à savoir une première extrémité de raccordement raccordée ou apte à être raccordée à l'embout 400 ; 400' de la ou d'au moins l'une des première(s) portion(s) 40 ; 40' et une deuxième extrémité de raccordement raccordée ou apte à être raccordé à l'embout 410 ; 410' de la ou au moins l'une des deuxième(s) portion(s) 41 ; 41'. On comprend que chaque ou au moins l'une des extrémité(s) de raccordement peut être configurée pour être raccordée à un ou plusieurs embouts 400 ; 400' ; 410, 410'. De préférence, le ou les élément(s) de raccordement 50 ; 50' présentent une forme allongée, de préférence droite et s'étendent préférentiellement parallèlement à l'axe de rotation X2.

On entend par « raccordement » une connexion ou une liaison, le cas échéant (pour un élément d'alimentation hydraulique) avec étanchéité, permettant d'assurer, selon le type d'élément d'alimentation 4, 4', le passage d'un courant électrique, d'une lumière ou d'un fluide entre chaque embout 400, 400' ; 410, 410' et l'élément de raccordement 50 ; 50' concerné de l'interface 5 ; 5'.

Dans le mode hydraulique, chaque élément de raccordement 50 de l'interface 5 peut comporter un canal axial 52 permettant le passage du fluide entre ses deux extrémités. Chaque canal axial 52 est ouvert vers l'extérieur à chacune des extrémités de raccordement 500, 501 ; 500', 501'.

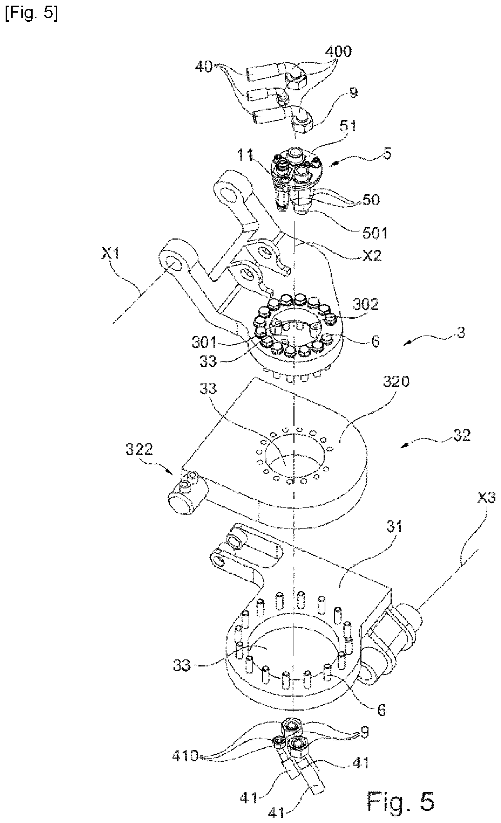

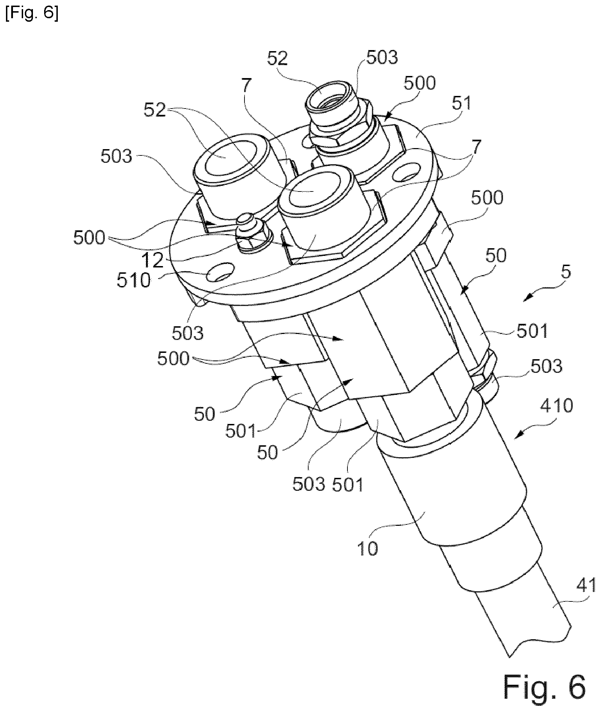

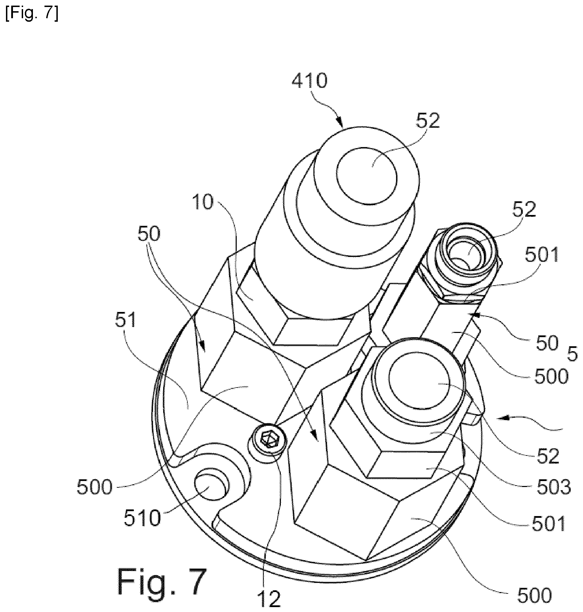

De préférence, l'interface 5 ; 5' peut comprendre un support 51 ; 51' dont la position est fixe dans le dispositif de liaison 3. Le support permet un arrangement particulier du ou des éléments de raccordement 50 ; 50', par exemple par rapport à l'axe de rotation X2. Dans l'exemple de réalisation, le support 51 ; 51' a une forme de disque, correspondant à l'ouverture 33. La forme du support est complémentaire à celle de l'ouverture 33. Le support 51 ; 51', comme l'interface 5 ; 5', est destiné à avoir une position fixe dans le dispositif de liaison 3. Le support 51 ; 51' porte le ou les éléments de raccordement 50 ; 50'. En présence de plusieurs éléments de raccordement 50 ; 50', ils sont fixés avec arrangement entre eux. Le support 51 ; 51' peut être fixé dans la première ou deuxième partie 30, 31 ; 30', 31' du dispositif de liaison 3, de préférence en étant centré sur l'axe de rotation X2 comme on peut le voir sur les figures 3 à 9. D'après les figures 1 à 5, le support 51 est fixé ou apte à être fixé sur la première partie 30 du dispositif de liaison 3. On peut voir sur la figure 5 plus particulièrement que le support 51 peut être fixé dans la première partie 30 au moyen de vis 11 vissées dans des trous taraudés 301 pratiqués dans la première partie 30. La première partie 30 comporte une ouverture interne circulaire formant une partie de l'ouverture 33. Le support 51 est fixé sur la première partie 30 au moyen d'au moins un élément de fixation 302 muni d'un trou taraudé 301 recevant par vissage la ou l'une des vis 11. La position du support 51 est donc fixe dans le dispositif de liaison 3. Les éléments de fixation 302 peuvent également former une surface d'appui supportant le support 51 dans l'ouverture de la première partie 30. Dans une forme de réalisation alternative et non représentée, dans le cas où au moins l'un des éléments de raccordement 500 comprend une partie mobile 501 pour former le raccord tournant, l'interface 5 peut être montée (ou fixée), par son support 51, sur la deuxième partie 31 du dispositif de liaison 3 de manière que l'embout 400 soit raccordé à la partie mobile 501 de l'élément de raccordement 50. Selon les figures 2 à 7, la machine comporte en outre une interface 5 et un support 51. L'interface 5 et le support 51 sont disposés au niveau du dispositif de liaison 3. L'interface 5, plus particulièrement le support 51, est destiné à porter trois éléments de raccordement 50 (Figures 6 et 7). Ces trois éléments de raccordement 50 sont arrangés autour de l'axe de rotation X2. Deux éléments de raccordement 50 sont arrangés de manière symétrique par rapport à un plan vertical passant par l'axe de rotation X2.

Dans une forme de réalisation préférentielle, comme on peut le voir plus particulièrement sur les figures 4 à 7, au moins l'un des éléments de raccordement 50 peut comporter une partie fixe 500 et une partie mobile 501 formant ensemble un raccord tournant. La partie mobile 501 comporte ou forme alors l'une des extrémités de raccordement de l'élément de raccordement 50. Les deux parties fixe et mobile 500, 501 autorisent ainsi une rotation de l'une des extrémités de l'élément de raccordement 50. Un tel raccord tournant (formé grâce aux parties fixe et mobile 500 501) est plus particulièrement adapté au mode hydraulique. Selon la réalisation représentée à la figure 4, l'embout 400 de la première portion 40 des éléments d'alimentation 4 est raccordé (par exemple via l'écrou 9 associé), à la partie fixe 500 de l'élément de raccordement 50 et l'embout 410 de la deuxième portion 41 des éléments d'alimentation 4 est raccordé à la partie mobile 501 de l'élément de raccordement 50 correspondant. Ainsi, l'embout 410 est apte à tourner autour de son axe de raccordement et suivre la rotation de l'outil 2 autour de l'axe X2. D'une manière générale sous l'effet d'un mouvement de l'outil 2 par rapport au bras 1 et notamment du dispositif de liaison 3, l'orientation de l'embout 410 et de la deuxième portion 41 de l'élément d'alimentation 4 par rapport à l'axe X2 pourront évoluer. Lorsque les première et deuxième parties 30, 31 pivotent l'une par rapport à l'autre, l'orientation de l'embout 410 pourra évoluer et suivre la rotation autour de l'axe X2 pour que la deuxième portion 41 du flexible puisse être bien orientée et ne pas se torsader. Le raccord tournant a pour avantage de limiter notablement les effets de boucle ou d'entortillement des éléments d'alimentation 4 autour de leur axe lors de la rotation de la première partie 30 par rapport à la deuxième partie 31 autour de l'axe de rotation X2.

Dans cette forme de réalisation préférentielle avec raccord tournant, chaque embout 410 raccordé à la partie mobile 501 de l'élément de raccordement 50 dispose ainsi d'une liberté de rotation. L'orientation de chacun des embouts 400 raccordés à la partie fixe 500 est fixe par rapport à l'axe X2. La partie fixe 500 est solidaire du support 51 de l'interface 5.

Comme on peut le voir plus particulièrement sur les figures 4 à 7, la fixation d'un élément de raccordement 50 sur le support 51, le cas échéant la fixation de la partie fixe 500, peut être réalisée par serrage au moyen d'un écrou 7. La partie fixe 500 peut être logée dans un perçage 510 ménagé dans le support 51 en dépassant par son extrémité. La fixation est alors réalisée par serrage au moyen de l'écrou 7 vissé sur l'extrémité, pouvant le cas échéant être la première ou deuxième extrémité de raccordement. L'extrémité de l'élément de raccordement 50 peut comporter un filetage externe 503 permettant de serrer le support 51 entre l'écrou 7 (vissé sur le filetage externe 503) et un épaulement 504 de l'élément de raccordement 50. Le même filetage externe 503 peut servir au raccordement par vissage d'un embout 400, 410 sur ladite extrémité de raccordement ainsi fileté. De cette manière, la partie fixe 500 de l'élément de raccordement 50 est bloquée en translation et en rotation sur le support 51. Ainsi, le cas échéant, l'embout 400 pourra mieux suivre le mouvement de rotation du dispositif de liaison 3 autour de l'axe X2.

Le support 51 peut être réalisé en deux parties, par exemple fixées l'une à l'autre, par exemple au moyen d'au moins un boulon 12. Cette structure en deux parties permet de faciliter le montage et est connue des systèmes passe cloison ou passe paroi. Par ailleurs, le trou de passage de ce boulon 12 ménagé dans le support 51 peut faire office de détrompeur permettant d'éviter les erreurs d'assemblage et de branchement pour les éléments de raccordement 50. Selon un autre exemple de réalisation non représenté, le support 51 est muni d'une encoche (non représentée) avec la fonction de détrompeur.

Sur les figures 6 et 7, on peut voir que l'un des embouts 410 est pourvu d'un raccord rapide 10. Le raccord rapide 10 permet une connexion rapide de l'embout 410 sur la partie mobile 501 du raccord tournant. Grâce à un tel raccord rapide 10, la mise en place de la connexion de l'embout 410 de la deuxième portion 41 de l'élément d'alimentation 4 est facilitée. Lorsque tous les éléments de raccordement 50 sont prévus pour pouvoir être raccordés à un tel raccord rapide 10 d'un embout 410, le changement de l'outil 2 est plus rapide. Lorsque l'élément de raccordement 50 n'est pas prévu pour qu'au moins l'une de ses extrémités de raccordement puisse être raccordée à un tel raccord rapide, l'embout peut être raccordé à la partie mobile ou fixe 500, 501 en étant vissé grâce à son raccord à vis et à l'écrou 9 associé à l'embout. De ce fait, l'élément de raccordement 50 est pourvu d'un filetage externe 503 au niveau de chacune de ses extrémités de raccordement. Le filetage externe 503 est représenté schématiquement sur les figures (uniquement la surface comportant le filetage est visible). Selon une autre réalisation, le filetage externe 503 pourra aussi être interne. Chaque partie fixe 500 et chaque partie mobile 501 est ainsi pourvue d'un filetage 503. On comprend qu'un raccord rapide 10 peut être connecté, par exemple par encliquetage, sur une nervure de l'extrémité de raccordement concernée. Une telle nervure peut être formée par le filetage 503. Le filetage 503 peut ainsi permettre la fixation d'un embout via une partie taraudée de ce dernier qui peut être l'écrou 9 associé ou le raccordement rapide d'un embout via le raccord rapide 10. Selon un mode de réalisation non représenté, un raccord rapide 10 peut être prévu de part et d'autre de l'élément de raccordement 50, c'est-à-dire à chacune de ses extrémités de raccordement, de manière à faciliter le montage et le démontage des embouts 400 et 410 des deux portions (première et deuxième portions) 40, 41 des éléments d'alimentation 4.

Si on se réfère aux figures 4, 5, 8 et 9, on peut voir que l'interface 5 ; 5' peut être centrée sur l'axe de rotation X2 ou sensiblement décalée par rapport à l'axe de rotation X2. De préférence l'interface 5 ; 5' peut être fixée sur la première ou deuxième partie 30, 31 ; 30', 31' du dispositif de liaison 3 ; 3' et peut s'étendre, notamment axialement, dans l'ouverture 33 ; 33'. De préférence, l'interface 5 ; 5' dispose d'une forme sensiblement complémentaire à l'ouverture 33 ; 33' qui peut être une ouverture interne circulaire. La section de l'ouverture 33 ; 33' représentée est circulaire ou globalement circulaire mais elle pourrait être carrée, octogonale même de forme quelconque.

Dans une forme de réalisation préférentielle représentée sur les figures 1 à 5, le mécanisme d'entraînement 32 peut consister en un dispositif rotateur comportant deux éléments rotateurs 320, 321 coaxiaux couplés entre eux en étant montés en rotation l'un par rapport à l'autre autour de l'axe de rotation X2 entre les première et deuxième parties 30, 31 du dispositif de liaison 3, à savoir un premier élément rotateur 320 fixé sur la première partie 30 et un deuxième élément rotateur 321 fixé sur la deuxième partie 31 et des moyens d'entraînement 322 permettant d'actionner la rotation d'au moins l'un des éléments rotateur 320, 321 par rapport à l'autre. De préférence l'ouverture 33 traverse axialement le dispositif rotateur. De préférence, les éléments rotateurs 320, 321 présentent chacun une forme annulaire permettant de délimiter une ouverture centrale formant au moins une partie de l'ouverture 33 à travers le dispositif de liaison 3.

Dans cette forme de réalisation préférentielle du mécanisme d'entraînement, comme on peut le voir plus particulièrement sur les figures 4 et 5, le mécanisme d'entraînement 32 peut comporter un carter formant le premier élément rotateur 320 et une couronne d'orientation formant le deuxième élément rotateur 321. Dans une variante non représentée, le carter peut former le deuxième élément rotateur et la couronne d'orientation peut former le premier élément rotateur. Le mécanisme d'entraînement 32 est avantageusement de configuration annulaire. La couronne d'orientation 321 est mobile en rotation autour de l'axe de rotation X2 par rapport au carter 320. On peut voir sur les figures 4 et 5 que le carter 320 est fixé sur la première partie 30 et la couronne d'orientation 321 est fixée sur la deuxième partie 31 du dispositif de liaison 3. De préférence, le carter 320 et la couronne d'orientation 321 peuvent présenter chacun une forme annulaire permettant de délimiter une ouverture centrale formant au moins une partie de l'ouverture 33 à travers le dispositif de liaison 3. Le carter 320 et la couronne d'orientation 321 peuvent être emboités l'un dans l'autre. La couronne peut être une couronne d'orientation à billes ou à rouleaux. Selon la représentation de la figure 4, la couronne 321 peut être emboitée dans le carter 320. Le carter 320 et la couronne d'orientation 321 peuvent être fixés respectivement sur les première et deuxième parties 30, 31 du dispositif de liaison 3 au moyen de vis 6 respectives. De telles vis 6, ou autres moyens de fixation, peuvent être répartis autour de l'ouverture 33 et/ou de l'axe de rotation X2. En outre, le mécanisme d'entraînement 32 comprend un moteur d'entrainement 322, par exemple un moteur hydraulique entrainant une vis sans fin, permettant d'actionner la rotation. On peut voir sur les figures 1, 2, 3 et 5 les entrée/sortie d'huile alimentant le moteur d'entrainement 322. Le mécanisme d'entraînement 32 est plus particulièrement adapté pour permettre une rotation allant de 0 à 360°. Grâce au mécanisme d'entraînement 32, le dispositif de liaison 3 peut pivoter autour de l'axe X2. Le mécanisme d'entraînement 32 dispose d'une forme compacte peu encombrante. Grâce à son carter 320, le mécanisme d'entraînement 32 est protégé de la poussière et des projections de végétaux. Le moteur d'entraînement 322 peut être un moteur électrique. Un tel mécanisme d'entraînement 32 de rotation en tant que tel est par exemple décrit dans la demande de brevet EP1150039A2.

Etant donné que l'ouverture 33 ; 33' est ménagée à travers le dispositif de liaison 3 ; 3' et que le dispositif de liaison 3 ; 3' est composé de la première partie 30 ; 30'de la deuxième partie 31 ; 31' et du mécanisme d'entraînement 32, 32', chacune de ces pièces dispose également d'une ouverture traversante, comme on peut le voir sur les figures 4, 5, 8 et 9. Les différentes ouvertures traversantes sont bien entendu alignées sur le même axe X2 de sorte à former au moins en partie l'ouverture 33 ; 33' à travers le dispositif de liaison 3 ; 3'. Les ouvertures internes circulaires traversantes du mécanisme d'entraînement 32 ; 32'de la première partie 30 ; 30' et de la deuxième partie 31 ; 31' sont alignée pour former ensemble l'ouverture 33 ; 33' (figure 4 pour l'ouverture 33). Comme vu précédemment l'ouverture interne circulaire par exemple de la première partie peut recevoir le support 51 de l'interface 5 de manière à la maintenir fixement dans l'ouverture 33.

Dans le mode électrique (figures 8 et 9), la machine pour l'entretien du paysage peut comprendre au moins deux éléments d'alimentation 4' électriques, dont l'un peut correspondre à une première polarité, par exemple positive, et l'autre à une deuxième polarité, par exemple négative afin d'alimenter en courant le moteur électrique. Ces éléments ont une forme globale annulaire avec une ouverture interne circulaire 33'. Ces éléments sont similaires dans leur fonction aux éléments décrits dans le mode hydraulique cependant leur forme peut être différente.

Dans le mode électrique, tel que représenté aux figures 8 et 9, l'interface 5' de raccordement électrique peut comprendre un seul élément de raccordement 50' électrique. L'élément de raccordement 50' électrique permet le raccordement de la première portion 40' de l'élément d'alimentation 4' à la deuxième portion 41'. A cet effet chaque portion 40', 41' dispose d'un embout 400', 410'. L'embout 400' de la première portion 40' est destiné à être raccordé à l'une extrémité de l'élément de raccordement 50' électrique et l'embout 410' de la deuxième portion 41' est destiné à être raccordé à l'autre extrémité de l'élément de raccordement 50' électrique. L'embout 400' est avantageusement circulaire et l'embout 410' est avantageusement rectangulaire donc, non cylindrique. Plus particulièrement dans le mode électrique et/ou avec un unique élément de raccordement 50', chaque extrémité peut être configurée pour être raccordée à plusieurs embouts (voir la figure 9) réunis dans un connecteur électrique.

Dans le mode électrique, la présente invention peut néanmoins prévoir qu'un ensemble réunisse au moins deux embouts qui sont raccordés à l'interface 5' par l'intermédiaire d'un même raccord tournant. Ainsi deux embouts correspondant chacun à une polarité électrique peuvent être réunis l'un à côté de l'autre dans un même connecteur raccordé à une partie de raccordement tournante de l'interface de raccordement (forme non illustrée). Un tel raccord tournant peut être un raccord (ou collecteur) tournant commercialisé par la société LTN Servotechnik Gmbh sous la référence « SC012 ».

La présente invention peut prévoir, notamment dans le mode électrique, que plusieurs embouts 400', 410', par exemple deux ou trois embouts 400', 410', d'un même ensemble de premières portions 40' et/ou d'un même ensemble de deuxièmes portions 41' soient réunis en étant maintenus fixement l'un à côté de l'autre sous la forme d'un connecteur 42' du type cosse ou prise électrique. Chaque embout 400', 410' concerné forme alors un contact électrique. L'interface 5 'de raccordement peut comporter préférentiellement un seul élément de raccordement 50' dont chaque extrémité comporte au moins deux contacts électrique reliés chacun à l'un des contacts électriques de l'autre extrémité. Un tel connecteur 42' est raccordé ou apte à être raccordé à l'une des extrémités correspondantes de l'élément de raccordement 50' en connectant fonctionnellement entre eux leurs contacts électriques respectifs pour assurer la liaison électrique entre chaque première portion 40' et la deuxième portion 41' du même élément d'alimentation 4'. Cette caractéristique permet, par une seule opération de raccordement/connexion du ou de chaque connecteur 42' à l'extrémité correspondante de l'élément de raccordement 50', de connecter rapidement l'ensemble des premières et/ou deuxièmes portions 40', 41' à l'interface 5'. De préférence, comme on peut le voir sur la figure 9, un connecteur 42' est uniquement prévu du côté de l'outil 2, c'est-à-dire pour l'ensemble des embouts 410' des deuxièmes portions 41', ce qui permet de connecter rapidement les deuxièmes portions 41', autrement dit les câbles d'alimentation électrique du côté de l'outil 2, à l'interface 5, notamment lors du changement de l'outil 2.

Si on se réfère aux figures 8 et 9 on peut voir une autre forme de réalisation du mécanisme d'entraînement 32' du mouvement de rotation des première et deuxième parties 30', 31' l'une par rapport à l'autre autour de l'axe de rotation X2. Un tel mécanisme d'entraînement 32' peut comprendre un vérin 321' hydraulique, électrique ou pneumatique dont le fût 322' peut être articulé, par exemple, sur la deuxième partie 31' et la tige 323' peut être articulée à son extrémité sur la première partie 30'. Le vérin 321' peut comporter des entrée/sortie 324' du fluide hydraulique ou pneumatique. Le vérin 321' peut être de préférence un vérin double effet.

Dans le cas où la présente invention prévoit en outre un circuit de refroidissement, par exemple pour le refroidissement du moteur 21 électrique, au moins deux élément(s) d'alimentation peuvent être prévus. L'énergie de refroidissement, par exemple un fluide de refroidissement tel que de l'eau glycolée peut être transportée par les éléments d'alimentation. Par exemple, un élément d'alimentation pour le liquide froid et un autre élément d'alimentation pour le liquide chaud. Ces deux éléments d'alimentation pourront de la même manière passer au travers de l'ouverture interne circulaire du dispositif de liaison. Plus particulièrement, la première portion pourra être connectée à la deuxième portion de l'élément d'alimentation grâce à un élément de raccordement relié au support de l'interface.

Dans une forme préférentielle, le dispositif de liaison 3 ; 3' peut comporter au moins deux articulations ou, dit autrement, une liaison à au moins deux axes de rotations. Le dispositif de liaison 3 ; 3' peut former préférentiellement une liaison triplement articulée. La liaison triplement articulée comprend trois axes de rotation X1, X2, X3. Un premier axe de rotation X1 entre la première partie 30 et le bras 1, un deuxième axe de rotation formé par l'axe de rotation X2 entre les première et deuxième partie 30, 31 et un troisième axe de rotation X3 entre la deuxième partie 31 et l'outil 2. La direction du deuxième axe X2 est sensiblement perpendiculaire au premier et au troisième axe X1, X3. Selon des alternatives non représentées, le dispositif de liaison peut présenter une liaison d'articulation simple avec un seul axe de rotation ou une liaison doublement articulée avec deux axes de rotation sensiblement perpendiculaire l'un par rapport à l'autre. Dans la forme de réalisation représentée sur les figures 8 et 9, le dispositif de liaison 3' dispose d'un axe de rotation X2 et d'un axe de rotation X3. L'axe de rotation X3 prévu sur la deuxième partie 31' est visible seulement sur la figure 9.

La présente invention a également pour objet un véhicule roulant motorisé équipé d'une machine pour l'entretien du paysage, plus particulièrement du type épareuse ou faucheuse-débroussailleuse. La machine pour l'entretien du paysage comporte un bâti 8 apte à être monté sur le véhicule roulant motorisé. La machine de l'entretien du paysage selon l'invention peut avoir une application dans le domaine agricole, forestier ou des travaux routiers.

Ainsi une machine pour l'entretien du paysage selon la présente invention présente notamment les avantages suivants :
- suppression de la longueur excessive des éléments d'alimentation (câbles, flexibles),
- absence de boucle autour de la liaison articulée,
- limitation ou suppression de l'entortillement des éléments d'alimentation autour de leur axe, de leur étirement, ou empêchement d'être torsadés,
- longueur réduite ou adaptée des éléments d'alimentation, risque d'arrachement/d'interférence réduit
- diminution de l'exposition aux risques extérieurs (branches),
- diminution de l'encombrement au transport, solution plus compacte.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention.

## Revendications

1. Machine pour l'entretien du paysage, plus particulièrement du type épareuse ou faucheuse-débroussailleuse, apte et destinée à équiper un véhicule motorisé, la machine comprenant
- un bras (1) articulé sur un bâti (8) apte à être monté sur le véhicule motorisé,
- un outil (2) relié de manière articulée à l'une des extrémités (1c) du bras (1) et comprenant des organes (20) de travail, plus particulièrement de coupe et/ou de broyage, entrainés par un moteur (21) supporté par l'outil (2),
- un dispositif de liaison (3 ; 3') assurant la liaison mécanique entre l'outil (2) et le bras (1) et comprenant une première partie (30 ; 30') solidaire du bras (1) et une deuxième partie (31 ; 31') solidaire de l'outil (2), un axe de rotation (X2) entre la première partie (30 ; 30') et la deuxième partie (31 ; 31') et un mécanisme d'entraînement (32 ; 32') du mouvement de rotation des première et deuxième parties (30, 31 ; 30', 31') l'une par rapport à l'autre autour de l'axe de rotation (X2),
- au moins un élément d'alimentation (4 ; 4') allongé, souple ou flexible, s'étendant au moins entre le bras (1) et l'outil (2),
**caractérisée en ce que** l'élément ou au moins l'un des élément(s) d'alimentation (4, 4') traverse le dispositif de liaison (3 ; 3') en étant guidé dans une ouverture (33 ; 33') pratiquée à travers le dispositif de liaison (3 ; 3') et que la machine comprend une interface (5 ; 5') de raccordement et un support (51 ; 51').

2. Machine selon la revendication 1, **caractérisée en ce que** l'ouverture (33 ; 33') est pratiquée à travers le dispositif de liaison (3 ; 3') de sorte que le ou chaque élément d'alimentation (4, 4') traverse le dispositif de liaison (3 ; 3') essentiellement au niveau de l'axe de rotation (X2).

3. Machine selon la revendication 1 ou 2, **caractérisée en ce que** l'ouverture (33 ; 33') est pratiquée à travers le dispositif de liaison (3) en s'étendant parallèlement à l'axe de rotation (X2), de préférence en étant centré sur l'axe de rotation (X2).

4. Machine selon l'une quelconque des revendications 1 à 3, **caractérisée en ce que** l'élément ou au moins l'un des élément(s) d'alimentation (4 ; 4') est divisé en deux portions (40, 41 ; 40', 41') raccordées fonctionnellement entre elles au moyen de l'interface (5 ; 5'), à savoir une première portion (40 ; 40') munie d'un embout (400 ; 400') raccordé à l'interface (5; 5') et une deuxième portion (41 ; 41') munie d'un embout (410; 410') raccordé à l'interface (5 ; 5') de sorte à être fonctionnellement raccordé à l'embout (400 ; 400') de la première portion (40 ; 40') de l'élément d'alimentation (4 ; 4') correspondant.

5. Machine selon l'une quelconque des revendications 1 à 4, **caractérisée en ce qu'**au moins l'un des embouts (400, 410 ; 400', 410') est raccordé à l'interface (5, 5') par l'intermédiaire d'un raccord tournant de sorte à pouvoir tourner librement autour de son axe de raccordement.

6. Machine selon l'une quelconque des revendications 1 à 5, **caractérisée en ce que** l'interface (5 ; 5') est centrée sur l'axe de rotation (X2) ou sensiblement décalée par rapport à l'axe de rotation (X2).

7. Machine selon l'une quelconque des revendications 1 à 6, **caractérisée en ce que** l'interface (5 ; 5') est fixée sur la première ou deuxième partie (30, 31 ; 30', 31') du dispositif de liaison (3 ; 3') et s'étend dans l'ouverture (33 ; 33').

8. Machine de travail agricole, selon l'une quelconque des revendications 1 à 7, **caractérisée en ce que** le mécanisme d'entraînement (32) consiste en un dispositif rotateur comportant deux éléments rotateurs (320, 321) coaxiaux couplés entre eux en étant montés en rotation l'un par rapport à l'autre autour de l'axe de rotation (X2) entre les première et deuxième parties (30, 31) du dispositif de liaison (3), à savoir un premier élément rotateur (320) fixé sur la première partie (30) et un deuxième élément rotateur (321) fixé sur la deuxième partie (31) et des moyens d'entraînement (322) permettant d'actionner au moins l'un des éléments rotateur (320, 321) par rapport à l'autre, de préférence l'ouverture (33) traverse axialement le dispositif rotateur.

9. Machine selon l'une quelconque des revendications 1 à 8, **caractérisée en ce que** l'interface (5 ; 5') de raccordement comprend un ou plusieurs élément(s) de raccordement (50 ; 50'), de préférence rigide, dédié(s) chacun à l'élément d'alimentation ou à au moins l'un des élément(s) d'alimentation (4 ; 4') et étant muni(s) chacun de deux extrémités de raccordement, de préférence axialement opposées.

10. Machine selon la revendication 9, **caractérisée en ce que** le ou les élément(s) de raccordement (50 ; 50') présentent une forme allongée, de préférence droite et s'étendent parallèlement à l'axe de rotation (X2).

11. Machine, selon la revendication 9 ou 10, **caractérisée en ce que** support (51 ; 51'), par exemple en forme de disque, porte l'élément de raccordement (50 ; 50') ou porte les éléments de raccordement (50 ; 50') avec arrangement entre eux et **en ce que** le support (51 ; 51') est fixé dans la première ou deuxième partie (30, 31 ; 30', 31'), de préférence en étant centré sur l'axe de rotation (X2).

12. Machine selon l'une quelconque des revendications 9 à 11, **caractérisée en ce qu'**au moins l'un des éléments de raccordement (50, 50') comporte une partie fixe (500) et une partie mobile (501) formant ensemble un raccord tournant, la partie mobile (501) comportant ou formant l'une des extrémités de raccordement de l'élément de raccordement (50 ; 50').

13. Machine selon l'une quelconque des revendications 4 à 12, **caractérisée en ce qu'**au moins l'un des embout(s) (400) est droit, coudé ou muni d'un coude, de préférence en angle droit ou obtus.

14. Machine selon l'une quelconque des revendications 1 à 13, **caractérisée en ce que** le dispositif de liaison (3) forme une liaison triplement articulée et comprend trois axes de rotation (X1, X2, X3), à savoir un premier axe de rotation (X1) entre la première partie (30) et le bras (1), un deuxième axe de rotation formé par l'axe de rotation (X2) entre les première et deuxième partie (30, 31) et un troisième axe de rotation (X3) entre la deuxième partie (31) et l'outil (2).

15. Machine selon l'une quelconque des revendications 1 à 14, **caractérisée en ce que** l'élément ou au moins l'un des éléments d'alimentation (4 ; 4') est un élément d'alimentation hydraulique ou électrique et le moteur (21) est un moteur hydraulique ou électrique.

16. Véhicule roulant motorisé équipé d'une machine pour l'entretien du paysage, plus particulièrement du type épareuse ou faucheuse-débroussailleuse, la machine pour l'entretien du paysage comportant un bâti (8) monté sur le véhicule roulant motorisé, **caractérisé en ce que** la machine consiste en une machine selon l'une quelconque des revendications 1 à 15.
